Europäisches Patentamt

(19) European Patent Office

Office européen des brevets

(11) Publication number: **0 005 982**
**B1**

(12) **EUROPEAN PATENT SPECIFICATION**

(45) Date of publication of patent specification: **28.12.83**

(21) Application number: **79300969.7**

(22) Date of filing: **29.05.79**

(51) Int. Cl.³: **E 02 F 5/22, E 02 B 11/00,
B 65 G 65/00**

(54) **Machine for filling a pre-cut slot in the ground.**

(30) Priority: **31.05.78 GB 2582278**

(43) Date of publication of application:
**12.12.79 Bulletin 79/25**

(45) Publication of the grant of the patent:
**28.12.83 Bulletin 83/52**

(84) Designated Contracting States:
**AT BE CH DE FR NL SE**

(56) References cited:
**DE - C - 411 760
FR - A - 1 015 916
GB - A - 979 472
GB - A - 1 286 522
US - A - 3 203 188
US - A - 3 471 953
US - A - 3 644 137
US - A - 3 807 067**

(73) Proprietor: **Davison, Geoffrey Wilfred
157 High Street
Cottenham Cambridge (GB)**

(72) Inventor: **Davison, Geoffrey Wilfred
157 High Street
Cottenham Cambridge (GB)**

(74) Representative: **Wain, Christopher Paul et al,
A.A. THORNTON & CO. Northumberland House
303-306 High Holborn
London WC1V 7LE (GB)**

Courier Press, Leamington Spa, England.

Machine for filling a pre-cut slot in the ground.

This invention relates generally to machines for filling slots, trenches or the like in the ground with granular material.

Previously to assist drainage ground having turf or artificial sports surfaces has had slots or the like, such as slits, channels or grooves, cut in the ground and filled with sand or other granular material. The slots have been filled by passing the material from a hopper directly into the slot. This gives rise to the problem of causing the material to flow from the hopper into the slot, which is particularly difficult if the material is wet sand, and of placing the material substantially evenly in the slot.

In US—A—3807067, there is disclosed a machine for filling a precut slot in the ground with granular material, the machine comprising a plurality of elements one behind the other for passing into the slot granular material which is deposited adjacent the slot, and a plurality of compressing elements arranged one behind another and arranged to project into the slot to different depths and to compress the material to those respective depths. The machine is of considerable complexity and therefore of large size and generally intended for filling large size ditches or trenches. The elements for passing the material into the slot are augers and the compressing elements are tampers, the augers and tampers requiring drive power. The machine does not deposit the material on the ground and is only operative in respect of material already deposited on the ground to *one side only* of the ditch or trench. The machine is, because of its size and complexity, not appropriate for filling relatively smaller slots formed in sports surfaces when providing drainage.

The present invention is characterised in that the machine includes a hopper for carrying a quantity of the granular material having a bottom opening arranged to deposit material from the hopper (as the machine moves forward) as a band extending to both sides of the slot, the elements for passing the granular material into the slot being pairs of converging scraper blades and the compressing elements being rollers or fingers mounted to project into the slot to said respective depths.

Thus the single machine operates simultaneously both to deposit the material and push it into the slot. The scraper blades and compressing elements (whether rollers or fingers) require no drive power, yet the slot is efficiently and effectively filled owing to the deposit of material to both sides of the slot and the use of the plurality of pairs of converging scraper blades (one pair behind another) and the use of the rollers or fingers which compress the material to successive depths.

Preferably the hopper is of the type known from US—A—3203188 or GB—A—979472, in having a rear aperture juxtaposed to its bottom opening, the hopper then being supported with the top of this aperture a sufficient distance above the ground to permit flow of the material through the aperture when the hopper is moved forwardly. Preferably an adjusting device is provided to adjust the height of this rear aperture (as is also known from US—A—3203188 and GB—A—979472).

When the hopper is moved forwardly, the material will pass through the aperture due to relative movement of the hopper and the ground.

Thus, no material will flow from the hopper until the hopper is moved relative to the ground. The amount of material deposited is dependent upon the distance of the top of the aperture from the ground.

Two forms of machine in accordance with the invention for depositing granular material into pre-cut slots or the like will now be described, by way of example, with reference to the accompanying drawings, in which:—

Figure 1 is a side view of one form of machine,

Figure 2 is a schematic plan view of a slot-filling assembly of the machine of Figure 1,

Figure 3 is a schematic elevational view of the assembly of Figure 2, when filling slot in the ground,

Figure 4, is a plan view of the slot-filling assembly of the other form of machine,

Figure 5 is a side view of the assembly of Figure 4,

Figure 6 is a side view of a modified hopper for use with the machines of Figures 1 and 4, and

Figure 7 is a detail perspective view of a adjusting device of the hopper of Figure 6.

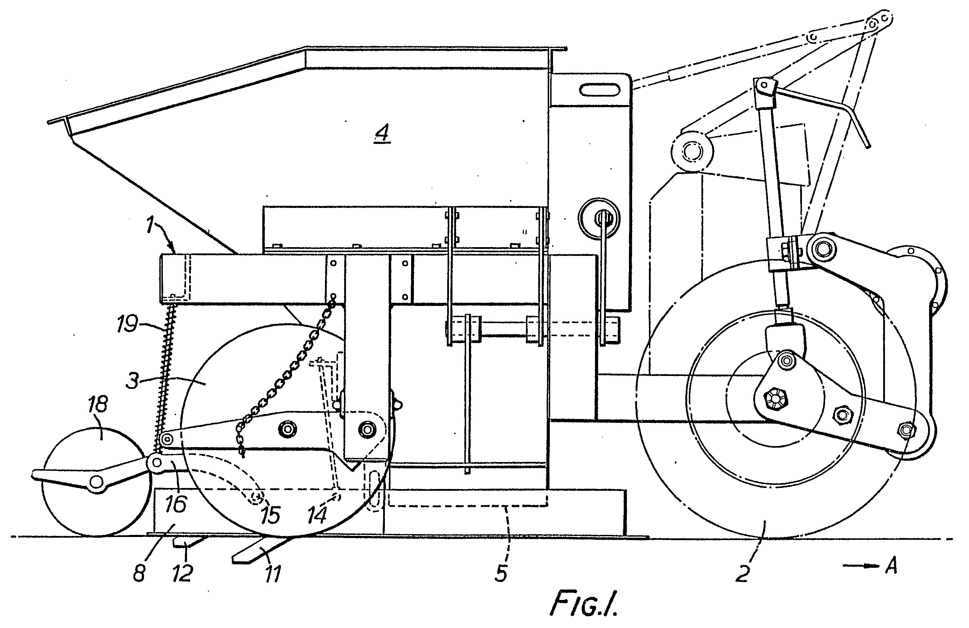

The machine of Figure 1 comprises an upper frame 1 carried by a front roller 2 and a pair of laterally spaced rear support rollers 3. The frame 1 supports a hopper 4 for granular material, such as sand, having a bottom opening 5 through which the sand is deposited on the ground.

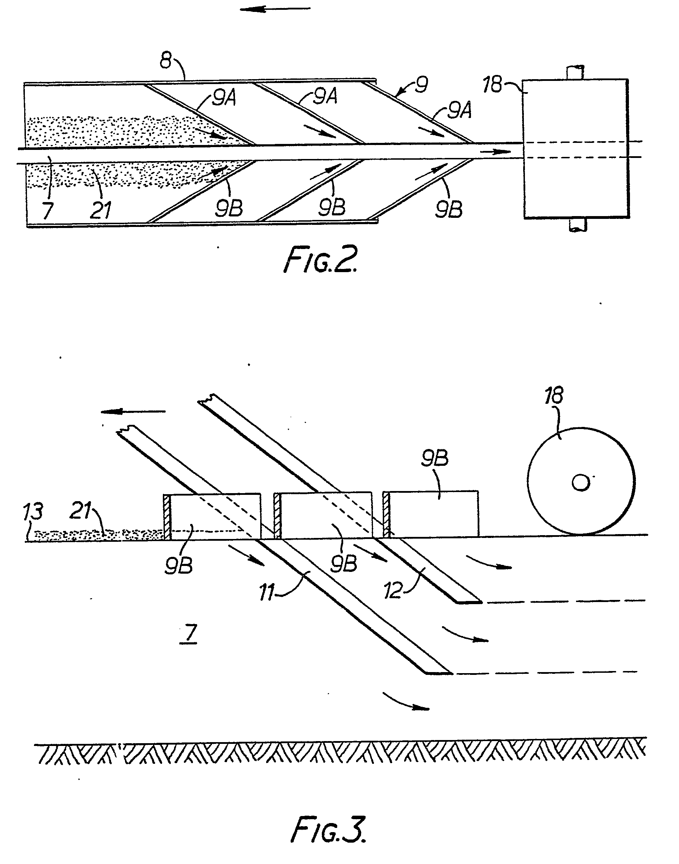

The assembly for filling a pre-cut slot 7 (Figure 2) comprises a casing 8 which is supported from the upper frame 1 and the lower edge of which is close to the ground. Connected to the side walls of the casing 8 is a series of scrapers 9, three being illustrated, each of which comprises two blades 9A, 9B which are inclined to the precut slot 7 to form a V-shape in plan. The blades may be of flexible material to ensure contact with the ground surface even if the surface is irregular.

Extending into the slot 7 are two fingers 11, 12 which are inclined to the ground surface 13 and which have widths substantially the same as the width of the slot 7. The forward finger 11 extends to a greater depth in the slot than the finger 12, and conveniently the finger 11

extends to approximately $\frac{2}{3}$ of the slot depth and the finger 12 approximately $\frac{1}{3}$ of the slot depth. The fingers 11, 12 are mounted on respective cross-members 14, 15 secured to the side walls of casing 8 and extending transversely thereof.

Pivotally connected to rear cross-member 15 are transversely spaced apart arms 16 (one of which is shown in Figure 1). Each arm 16 supports a rear roller 18 and is coupled to the upper frame 1 by a spring loaded link 19.

In operation, the slot may be cut by any suitable machine either mounted on the upper frame 1 or separately therefrom. The machine is moved forwardly, in the direction of arrows A, and sand from the hopper 4 is deposited in a band 21 on both sides of the slot 7. The scrapers 9 push the sand into the slot 7 and the finger 11 compresses the sand to $\frac{1}{3}$ of the depth of the slot. The following finger 12 compresses the sand to $\frac{2}{3}$ of the depth of the slot and the rear roller 18 compresses the remaining $\frac{1}{3}$ of the depth. Thus, the sand is distributed reasonably evenly over the depth of the slot and firmly located in the slot.

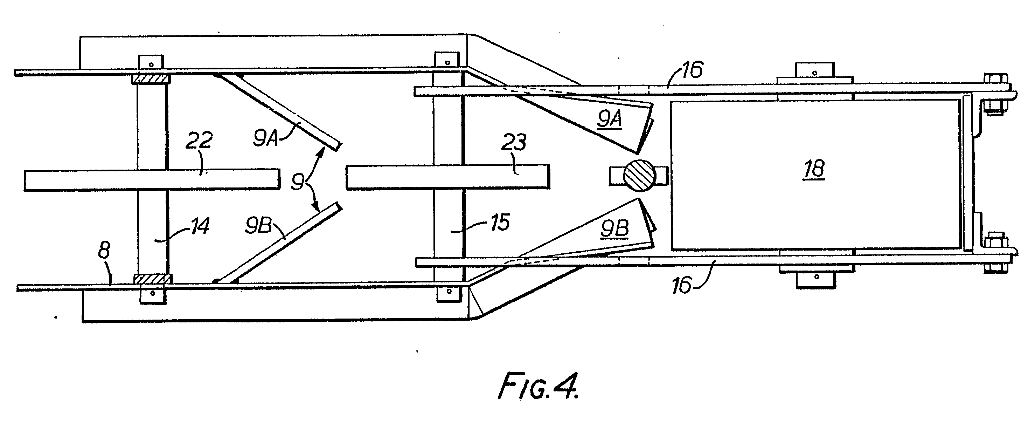

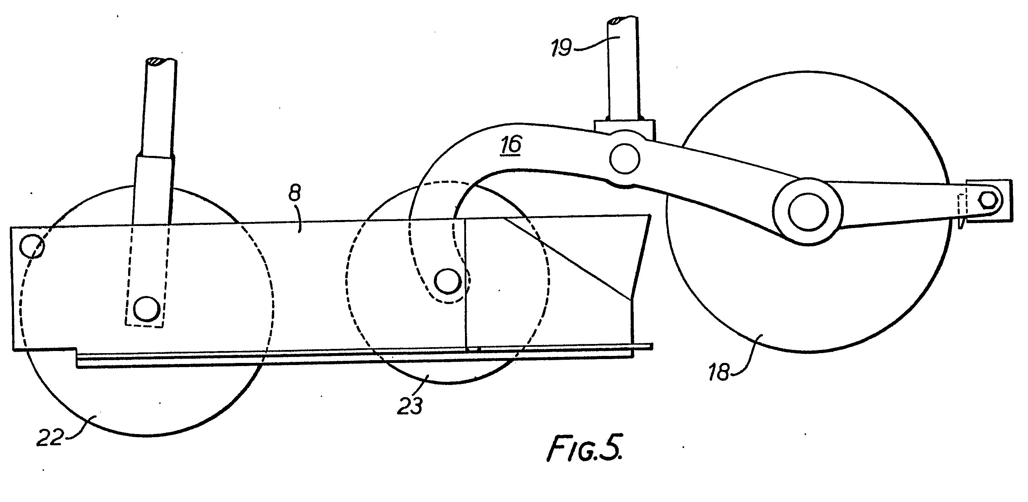

With reference to Figures 4 and 5, corresponding parts of the machines of Figures 1 to 3 and Figures 4 and 5 have, for the sake of simplicity, been given the same reference numerals. The main differences of the machine of Figures 4 and 5 are that the fingers 11, 12 have been replaced by rollers or discs 22, 23 which are respectively freely rotatable on the cross-members 14, 15 and that only two scrapers 9 are provided, one rearwardly of each disc.

The arrangement of the discs is such that the forward disc 22 extends into the slot to a depth greater than the rear disc 23, thus ensuring compaction of the sand as described above with the fingers. The different depths of the discs in the ground is achieved by both having discs of different diameter and by having the cross-members at different heights. However, it will be appreciated that a similar effect could be had by having discs of the same diameter and increasing the difference in height between the cross-members or by having the cross-members at the same height and a greater difference in disc diameter. It is preferred that the rear disc 23 has a width slightly greater than the width of the forward disc 22.

The above-described machines could be used to fill a wide range of slots, for example from 5 mm wide and 10 mm deep to a large trench as is required to backfill over drainage or other pipes.

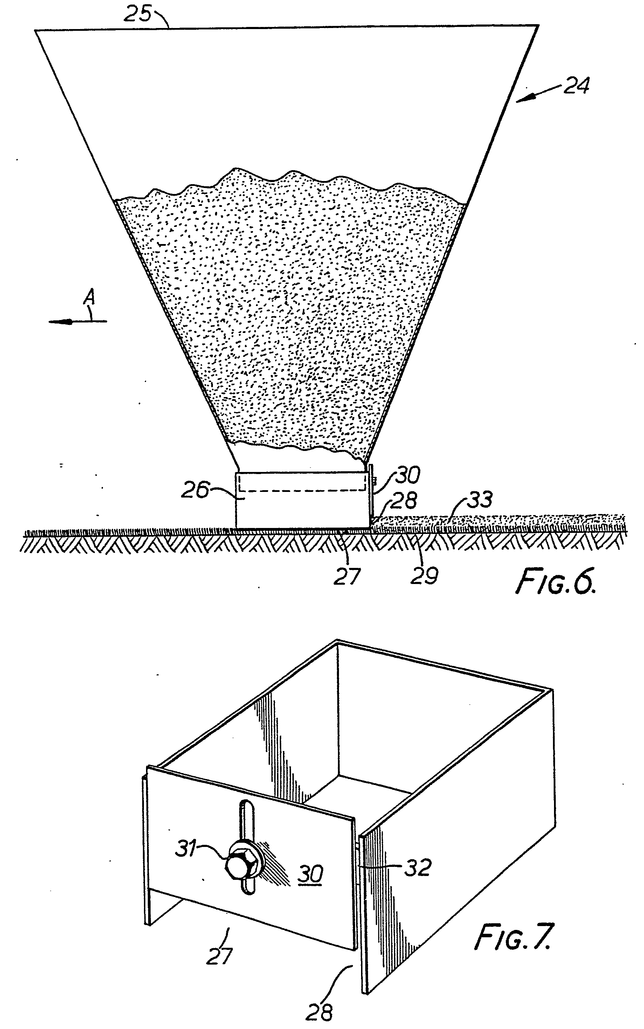

A suitable hopper for use with the machines of Figure 1 or Figure 4 is illustrated in Figures 6 and 7. The hopper 24 is rectangular in plan and has a top opening 25 for loading sand or other granular material. At the bottom of the hopper is a flexible skirt 26, for example of rubber, which defines the bottom opening 27.

The rear wall of the hopper has an aperture 28 juxtaposed to the bottom opening 27. The distance of the top of the aperture 28 from the surface 29 of the ground is adjustable by means of a regulating shutter 30 (Figure 7) which is adjustable vertically by means of a bolt 31 secured to a cross-piece 32.

In use the hopper is arranged so that the bottom edge of the skirt 26 is in contact with or close to the ground surface 29. As the hopper is moved in the direction of arrow A, a layer 33 of sand is deposited on the ground surface, the depth of the deposit being dependent upon the distance of the bottom of the shutter 30 from the ground surface. The hopper may have a plurality of such bottom openings. The hopper 24 may be located on the upper frame 1.

The flexible skirt 26 could be replaced by movable plates, for example of steel, which may be spring loaded.

## Claims

1. A machine for filling a pre-cut slot in the ground with granular material, said machine comprising a plurality of elements, arranged one behind another, for passing into the slot granular material which is deposited adjacent the slot, and a plurality of compressing elements arranged one behind another and arranged to project into the slot to different depths and to compress the material to those respective depths, characterised in that the machine includes a hopper (4, 24) for carrying a quantity of the granular material and a dispenser having a bottom opening (5, 27) arranged to deposit material from the hopper (as the machine moves forward) as a band extending to both sides of the slot (7), the elements for passing the granular material into the slot being pairs (9A, 9B) of converging scraper blades and the compressing elements being rollers (22, 23) or fingers (11, 12) mounted to project into the slot to said respective depths.

2. A machine as claimed in claim 1, characterised in that the hopper (24) has a rear aperture (28) juxtaposed to the bottom opening (27), the hopper being supported with the top of the aperture (28) a sufficient distance above the ground to permit flow of the material through the aperture when the hopper is moved forwardly.

3. A machine as claimed in claim 2, characterised in that an adjusting device (30, 31, 32) is provided to adjust the height of the rear aperture (28).

## Revendications

1. Machine pour remplir de matériau granuleux une fente prédécoupée dans le sol, ladite machine comprenant une multitude d'éléments, disposés les uns derrière les autres, destinés à faire passer dans la fente le matériau granuleux déposé en contiguïté de la fente, et une multitude d'éléments de compression disposés les uns derrière les autres et montés en saillie pour rentrer dans la fente à différentes profondeurs et compresser le matériau à ces profondeurs respectives, caractérisée par le fait que la machine comprend une trémie (4, 24) contenant une certaine quantité du matériau granuleux, comportant une ouverture inférieure (5, 27), et un distributeur automatique aménagé pour déposer le matériau en provenance da la trémie (à mesure de l'avancement de la machine), en forme de bande se prolongeant de part et d'autre de la fente (7), les éléments destinés à faire passer dans la fente le matériau granuleux consistant en des paires (9A, 9B) de pales raclantes convergantes et les éléments de compression consistant en des rouleaux (22, 23) ou des doigts (11, 12) montés en saillie pour rentrer dans la fente auxdites profondeurs respectives.

2. Machine selon la revendication 1, caractérisée par le fait que la trémie (24) est munie d'un orifice arrière (28) juxtaposé à l'ouverture inférieure (27), la trémie étant maintenue telle que le sommet de l'orifice (28) se trouve à une distance du sol suffisante pour permettre l'écoulement du matériau au travers de l'orifice lors du mouvement vers l'avant de la trémie.

3. Machine selon la revendication 2, caractérisée par le fait qu'un dispositif de réglage (30, 31, 32) est prévu pour ajuster la hauteur de l'orifice arrière (28).

**Patentansprüche**

1. Maschine zum Ausfüllen einer zuvor ausgehobenen Spalte im Boden mit körnigem Material, wobei die Maschine aus mehreren, hintereinander angeordneten Elementen zur Einführung neben der Spalte abgelegten körnigen Materials und mehreren hintereinander angeordneten Verdichtungselementen, die auf verschiedenen Tiefen in die Spalte vorstehen und das Material auf diese entsprechenden Tiefen verdichten sollen, besteht, dadurch gekennzeichnet, dass die Maschine einen eine Menge körniges Material aufnehmenden Fülltrichter (4, 24) mit einer Bodenöffnung (5, 27) und ein Abgabegerät enthält, das so angeordnet ist, dass es Material aus dem Fülltrichter (mit der Fortbewegung der Maschine) als ein sich beidseitig der Spalte (7) erstreckendes Band ablegt, wobei die Elemente zum Einführen des körnigen Materials in die Spalte Paare (9A, 9B) aufeinander zulaufender Abstreichmesser und die Verdichtungselemente Walzen (22, 23) oder Finger (11, 12) sind, die in die Spalte auf die entsprechenden Tiefen vorstehend gelagert sind.

2. Maschine nach Anspruch 1, dadurch gekennzeichnet, dass der Fülltrichter (24) neben der Bodenöffnung (27) eine Hinteröffnung (28) aufweist, wobei der Fülltrichter mit der Oberseite der Oeffnung (28) genügend weit über dem Boden abgestützt ist, damit das Material bei der Vorwärtsbewegung des Fülltrichters durch die Oeffnung fliessen kann.

3. Maschine nach Anspruch 2, dadurch gekennzeichnet, dass eine Einstellvorrichtung (30, 31, 32) zur Höhenverstellung der Hinteröffnung (28) vorgesehen ist.

FIG. I.

0 005 982

FIG.2.

FIG.3.

FIG.4.

0 005 982

19

16

8

22

23

18

4

0005 982

FIG.5.

*Fig.6.*

*Fig.7.*